# EUROPEAN PATENT APPLICATION

(11) **EP 4 831 046 A1**
(43) Date of publication of application: **28.10.2026**
(21) Application number: 25171983.7
(22) Date of filing: 23.04.2025
(51) Int. Cl.: B62D 61/10, B62D 63/02

(54) **AUTONOMOUS TRANSPORT SYSTEM**

(71) Applicant: Poly-clip System GmbH & Co. KG, 65795 Hattersheim (DE)
(72) Inventor: Gerhardt, Lucas, 60528 Niederrad (DE); Jöst, Norbert, 65191 Wiesbaden (DE); Seelmann, Jan, 65795 Hattersheim a. Main (DE)
(74) Representative: Eisenführ Speiser

(57) **Abstract**

According to the present invention, there is provided an autonomous transport system (1000) having at least a front side (1001), a rear side (1002), two lateral sides (1003, 1004), a top side (1005) and a bot-tom side (1006, the autonomous transport system (1000) comprises a drive assembly (1100) for moving the transport system (1000) on a ground, a carrier assembly (1200), a control unit (CU) and a sensor assembly (1300). The drive assembly (1100) includes at least one drive unit (1120) for driving at least one wheel unit (1123), a chassis (1140) on which the at least one drive unit (1120) and the wheel unit (1123) are mounted, and a housing (1110) for covering the at least one drive unit (1120). The housing (1110) comprises at least side plates (1114, 1115), a front plate (11112) and a rear plate (1113), wherein the side plates (1114, 1115) and the chassis (1140)) are provided with recesses (1114a, 1141a) for the wheel unit (1123, and wherein the recesses (1114a, 1141a) for the wheel unit (1123) include sealing means (1400) for fluid tight encapsulating at least the at least one drive unit (1120).

## Description

The present invention relates to an autonomous transport system which comprises a drive assembly for moving the transport system on a ground, and a carrier assembly.

Autonomous or driverless transport vehicles are known, for e.g. transporting goods or semi-finished products in a factory from a loading station or a working station of a machine to an unloading station or another work station of a further machine or to a storage place. The driverless transport system usually moves along predefined movement paths between the two stations or places, without the need of an operator.

One such autonomous transport vehicle is known from EP 3 712 102 A1. The vehicle includes a drive chassis supported on two independent parallel drive wheels, actuated by two drive motors, a transport chassis the central area of which is superimposed on and connected to the drive chassis through a rotary joint, the transport chassis being supported on multiple omnidirectional wheels. The drive unit further includes a rotating device, actuated by a rotary motor, integrated in the rotary joint between the transport chassis and the drive chassis, which determines the angular position of the drive chassis with respect to the transport chassis, and a control device configured for adjusting at least the two drive motors and the rotary motor in a coordinated manner to obtain omnidirectional movement of the transport chassis.

From WO 2022/258480 A1, a driverless transport vehicle for a textile factory is known, which comprises a traveling unit, which travels autonomously to a defined destination within a textile factory, and a carrying unit, which is arranged on the traveling unit and is designed to carry a unit to be transported for textile material that can be loaded and unloaded by means of a loading and unloading device, said loading and unloading device being part of the transport vehicle.

Such known autonomous transport vehicles may securely transfer items on defined paths between two locations in a factory. In said factories, the known autonomous vehicles are operated under dry and clean conditions. Increased humidity, splashing water or dirt would impede the functionality of said autonomous vehicles, and would lead to down times and production losses.

Thus, it is an object of the present invention to provide an autonomous transport system, with which the above mentioned drawbacks may be overcome, and which enables a reliable functionality, and with which unnecessary downtimes and production losses may be prevented.

According to the present invention, there is provided an autonomous transport system with at least a front side, a rear side, two lateral sides, a top side and a bottom side, wherein the autonomous transport system comprises a drive assembly for moving the transport system on a ground, a carrier assembly, a control unit and a sensor assembly. The drive assembly includes at least one drive unit for driving at least one wheel unit comprising at least one drive wheel, a chassis or frame on which the at least one drive unit and the wheel unit are mounted, and a housing for covering at least the one drive unit, in which the housing comprises at least side plates or panels, a front plate or panel and a rear plate or panel. The side plates and the chassis are provided with recesses for the wheel unit, and the recesses for the wheel unit include sealing means for at least fluid tight encapsulating at least the one drive unit.

The fluid or liquid tight encapsulation of the drive unit prevents moisture and/or dirt from negatively influencing or affecting the drive unit and enables the autonomous transport system to operate under various conditions.

It should be noted that the housing cannot only covers the drive unit, but also the drive assembly and/or other components of the transport system. The sealing means may be configured not only to provide a fluid-tight enclosure or encapsulating for the drive unit, but also to prevent dust or other debris from reaching the drive unit or the entire drive assembly. The sealing means may be made of only one material and/or component, but they may also comprise one or several rigid sealing elements, such as housing plates or panels and the like, as well as one or several flexible sealing elements, such as profiled seals made of rubber and the like.

The recesses provided in the side plates and the chassis serve to allow one or more drive wheels of one or more wheel units to be located outside the sealed enclosure. In this case, it is preferred that the arrangement of the at least one or more drive wheels be flush with the outer surface of the side plates. However, it goes without saying that the one or more drive wheels can also be arranged further inside the chassis in relation to the side plates.

In a preferred embodiment of the inventive autonomous transport system, the drive assembly includes at least one second drive unit comprising at least one drive wheel, wherein the first and second drive units each are arranged in a recess of the side plates and/or the chassis, and wherein the sealing means include sealing elements arranged at least between the first and second drive units and the chassis. The recesses for the drive wheels are arranged at least approximately in the mid or center of the side plates and opposite to each other. The axles of the drive wheels are coaxial and perpendicular to the centreline of the chassis, which extends from the front end to the rear end.

The first and second drive units, which may preferably be controlled at least partially independently from each other, enable the transport system to precisely be moved along a predefined movement path. Moreover, the additional sealing means for the first and second drive unit further enhance the fluid tight encapsulation of the drive assembly.

In a further preferred embodiment of the autonomous transport system, the chassis has an at least approximately even bottom portion or panel and at least one dome formed by the bottom panel or manufactured separately and attached to the bottom panel, wherein the dome extends upwardly from an upper surface of the bottom panel, and at least one support wheel is accommodated and at least fluid tight mounted in the cavity formed by the at least one dome, with the support wheel partially extending below the lower surface of the bottom panel of the chassis. in this configuration, the support wheel holds the bottom portion of the drive assembly, formed by the chassis, at least approximately parallel to the ground on which the transport system is moved. The fluid tight mounting of the support wheel in the dome further supports the encapsulation of the drive assembly. Preferably, the transport system has two support wheels located at least approximately close to the front and rear end of the chassis and at least approximately on the center line of the chassis. Further preferably, four support wheels are located at least approximately at the corners of the chassis. The transport system is then in contact with the floor with one or more drive wheels and one or more support wheels.

For further enhancing the fluid tight encapsulation of the drive assembly, it is of advantage that the sealing means include sealing elements arranged between the housing and the chassis. The sealing means thereby may seal or encapsulate not only the drive units, but also any further unit or component accommodated in the housing, like electric or electronic components, or mechanical elements or assemblies. Said units or components are prevented from moisture and dust, which could cause corrosion or wear.

Generally, the sealing means may include sealing elements made of identical material, like rubber or plastic. The sealing elements may have a longitudinal extending shape, like a string, and may have any suitable cross section, like a circular, rectangular or triangular cross section. The sealing elements, alternatively or additionally, may include one or more sealing lips, or may form a labyrinth sealing.

The material for the sealing elements may be selected, dependent on their position or the specific requirements, and may include materials of different hardness, or combinations of a soft sealing material supported on stiffer carrier material, like a strip made of plastic or metal.

The sealing means may further consist of a combination of a specific sealing element and a corresponding constructive element at the component or element which is in contact with the sealing element(s). Such a constructive element may be a bead extending along an edge of a housing element or the chassis or specifically angled portions. The constructive elements preferably have a shape corresponding to the cross-sectional shape of the sealing element with which they come in contact.

The sealing elements may further have a shape that allows an engagement of the sealing element and a portion of the element of the drive assembly, like a housing element or a portion of the chassis.

The above explained sealing elements provide detachable fluid tight connections between two neighbouring elements or units of the transport system. At certain points of the transport system, or with regard to specific components or units, which e.g. are maintenance-free, it is further possible that the sealing means include permanent connections between the respective elements or components, which may be realized by welding or gluing.

In the inventive autonomous transport system, the chassis has an approximately vertically front side portion and an approximately vertically rear side portion, which extend from the upper side of the bottom portion, a horizontal front side portion and a horizontal rear side portion, which extend from the upper edges of the vertical front side portion and the vertical rear side portion towards the front end and the rear end of the bottom portion, respectively, and the sealing means include sealing elements arranged along the outer edges of the vertical front and rear side portions and the horizontal front and rear side of the chassis. The drive assembly is securely sealed in the transition area between the chassis and the housing. Furthermore, in this constitution, a space or room is created between the horizontal and vertical portions of the chassis and the respective portion of the housing, particularly the front or rear hood or panel, in which specific equipment, like one or several sensor devices or lightning equipment may be accommodated, and which additionally provides protection against damages, particularly caused by possible collisions.

For further completion of the encapsulation of the drive assembly, it is further of advantage, that the sealing means include sealing elements arranged between the side plates and front plates of the housing and the chassis. The drive assembly is thereby prevented against humidity not only from below but from all sides.

In preferred configuration of the inventive autonomous transport system, the carrier assembly has an at least approximately cuboid first carrier unit arranged horizontally above the drive assembly, and preferably supported by approximately vertically aligned support posts, which are mounted to the drive assembly. Further preferably, the first carrier unit has a front side and a rear side which correspond to the front side and the rear side of the drive assembly. The first carrier unit thereby provides a platform, on which specific structures or sub-units, designed for specific tasks and/or equipped with specific functions, may be arranged.

In a further preferred configuration of the inventive autonomous transport system, the control unit includes a first control device mounted preferably at or in the region of the front side of the first carrier unit, and preferably a second control device mounted to the rear side of the first carrier unit. The presence of the first and second control devices enable an operator to control the transport system from a safe position, e.g. without interfering the movement path of the transport system.

Advantageously, also the first and second control devices each have a housing for at least fluid tight accommodating the components of the control devices, whereby the protection against critical conditions, like increased humidity or splashing water, is further improved.

The carrier assembly may have any suitable configuration for executing a specific function. In a preferred design, the carrier assembly has an approximately cuboid second carrier unit arranged on the upper surface of the cuboid first carrier unit.

Said second carrier unit may be adapted to a specific function or to specific goods to be handled.

In order to adapt the transport system to specific goods or items to be handled, it is possible to exchange at least the second carrier unit by another second carrier unit of a desired configuration.

In the case that an item, like a storage frame or carriage provided with wheels, has to be moved by the inventive transport system, the first carrier unit includes a lifting arrangement for lifting at least the second carrier unit. Thereby, the storage frame is brought out of contact with the ground, and may securely be moved by the transport system.

In a further preferred design, the second carrier unit has a separation device arranged on its upper surface, for separating the upper surface into two at least approximately equal sub-surfaces. Thereby, it is possible to transport two at least approximately identical items, like to identical boxes, such as standardized boxes, which are arranged on the second carrier unit in defined positions. Accordingly, said boxes may automatically be loaded onto or removed from the transport system. In addition, said separating device may further function as a positioning aid, e.g. as an abutment element for the item to be handled. However, further positioning devices or elements may be provided at second carrier unit, for further enabling a defined positioning of the item to be handled.

It has to be understood that also a single item or box may be arranged on a defined position on the transport system, or more than two boxes. In the first case, the separation device may be removed from the second carrier unit, or may be positioned along an outer edge of the second carrier unit, such that an abutment is provided for the single item to be transported. In the second case, where more than two items have to be transported, more than one separation device may be provided, for separating the top surface of the second carrier unit into a number of sub-surfaces, dependent on the number and size of the items to be transported. The top surface of the second carrier unit may be separated into sub-surfaces of equal size and shape or into sub-surfaces of different size and shape. It has to be understood that the separation elements may have a suitable shape, like a suitable height, length or width, which may be selected dependent on the number and shape of the sub-surfaces to be created.

In a preferred embodiment of the inventive autonomous transport system, the sensor assembly includes at least a first sensor device arranged in the region of the front end of the drive assembly, for at least detecting obstacles in the movement path of the transport system. The sensor assembly, and in particular, the first sensor device, thereby enables a safe operation of the autonomous movement of the transport system, even in the case of unexpected obstacles or persons in the movement path.

In order to enhance the functionality of the autonomous transport system, the sensor assembly may include a second sensor device with at least one sensor element arranged in the separation device, for detecting the presence or absence of an object positioned on the upper surface of the second carrier unit. Naturally, said sensor device may also detect the presence or absence of any further object positioned on the upper surface of the second carrier unit.

It has to be understood that further sensor devices may be provided, like weight sensors for detecting the filling degree of the one or more items, like a boxes, positioned on the second carrier unit. Moreover, a tilt sensor may be provided for detecting the inclination of at least the upper surface of the second carrier unit, or the transport system at all.

In a further preferred embodiment of the transport system, the control unit is adapted to control the movement of the transport system on the basis of a programmed movement profile and/or on the basis of programmed starting and destination points, with an autonomous movement there between, controlled by sensor data provided by the sensor assembly. Thereby, a safe and reliable autonomous transport of good or items between the starting and destination points is enabled.

The control unit of the transport system may execute further functions of the transport system, like checking the loading conditions or informing an operator in the case of disruptions.

Further advantages and preferred embodiments of the present invention will be described in the following together with the drawings listed below. The expressions *"leff", "right", "below"* and *"above"* used in the following description, are referred to the drawings in an alignment such that the reference numbers and the notation of the figures used can be read in normal orientation.
- Fig. 1:: is a perspective view to an autonomous transport system according to the present invention;
- Fig. 2:: is a plan view to a lateral side of the autonomous transport system according to Fig. 1;
- Fig. 3:: is a perspective view from below to view to a bottom side of the autonomous transport system according Fig. 1;
- Fig. 4:: is a perspective view to the autonomous transport system according to Fig. 1 with removed parts of the housing;
- Fig. 5:: is a partial cross sectional view to a drive unit of the autonomous transport system;
- Fig. 6:: is a partial cross-sectional view to a housing portion of the autonomous transport system;
- Fig. 7:: is a cross-sectional view to a control device of the autonomous transport system; and
- Fig. 8:: is a perspective view to the carrier assembly of the autonomous transport system.

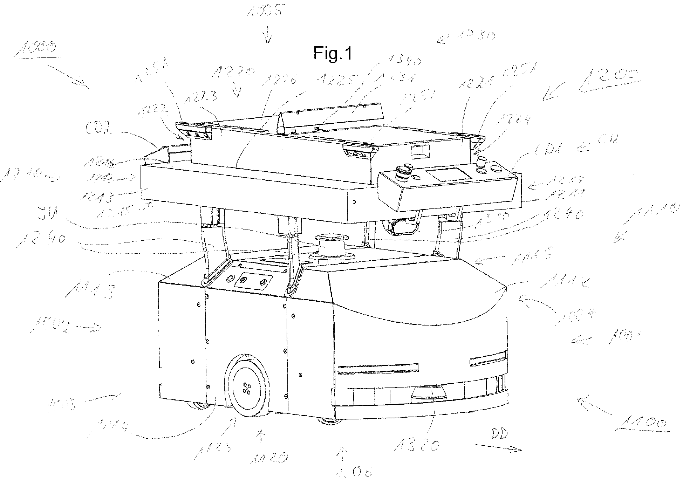

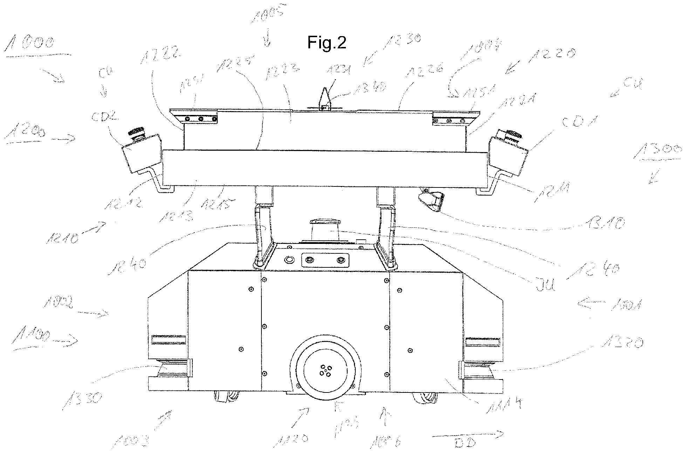

Fig. 1 is a perspective view to an autonomous transport system 1000. Autonomous transport system or transport system 1000 for short has a front side 1001, a rear side 1002, a right side 1003, a left side 1004, a top side 1005 and a bottom side 1006. Fig. 2 is plan view to right side 1003 of transport system 1000. Transport system 1000 includes at least a drive assembly 1100, a carrier assembly 1200 and a sensor assembly 1300.

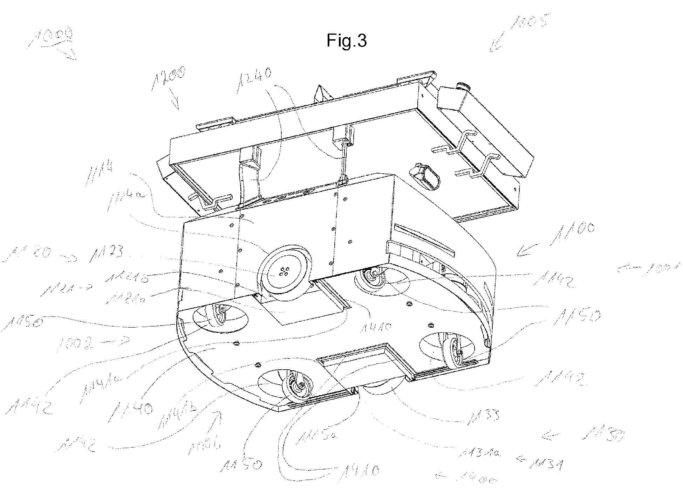

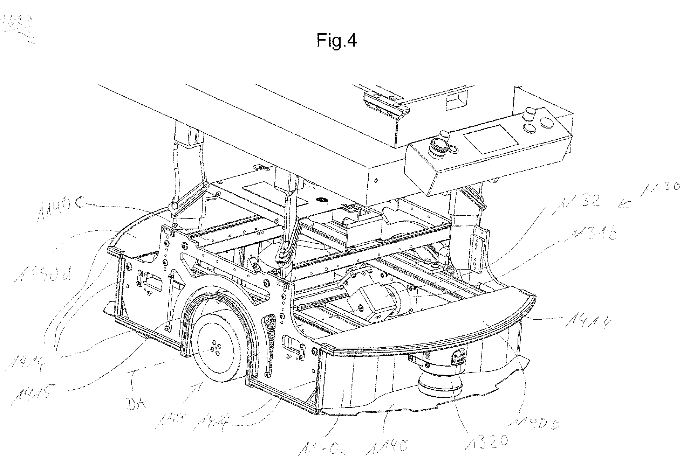

Drive assembly 1100 comprises a housing 1110, which includes a front plate or panel or front hood 1112, which covers a front section of drive assembly 1100, a rear plate or panel or rear hood 1113 covering a rear section of drive assembly 1100, and a left and a right side plate or panel 1114, 1115, which extend between front and rear hoods 1112, 1113. Drive assembly 1100 further comprises a first drive unit 1120 and a second drive unit 1130, which will be explained in detail in conjunction with Figs. 3 and 4. In Figs. 1 and 2, only first drive unit 1120 is visible.

Carrier assembly 1200 includes an approximately cuboid first carrier unit 1210 arranged at least approximately horizontally above drive assembly 1100. First carrier unit 1210 has a front side 1211, a rear side 1212, a left side 1213, a right side 1214, a bottom side 1215 and a top side 1216. A second carrier unit 1220, which also has a cuboid shape, is arranged on top side 1216 of first carrier unit 1210. Second carrier unit 1220 has a front side 1221, a rear side 1222, a right side 1223, a left side 1224, a bottom side 1225 and a top side 1226.

On top side 1226 of second carrier unit 1220, a separation device 1230 is arranged (cf. also Fig. 1), which includes a separation element 1231 in the shape of a bar formed by a hollow profile, which extends between left and right side 1223, 1224 of second carrier unit 1220, and which separates top surface 1226 of second carrier unit 1220 into two at least equal sub-surfaces, on which two objects, like boxes, preferably standardized boxes, may be placed.

As can be seen in Figs. 1 and 2, first carrier unit 1210 is supported above drive assembly 1100 by four support posts 1240, which extend upwardly from drive assembly 1100, and to the upper ends of which first carrier unit 1220 is mounted, such that a gap is created between drive assembly 1100 and carrier assembly 1200. Support posts 1240 stand out from housing 1110 in a region between front hood 1112 and side plates 1114, 1115, and rear hood 1113 and side plates 1114, 1115 respectively.

In first carrier unit 1210, a lifting mechanism (not shown) may be incorporated, for reversibly lifting second carrier unit 1220. Top surface 1226 of second carrier unit 1220 may thereby be brought to a height, which corresponds to the height of a work place where transport system 1000 is loaded or unloaded, like the work place at a machine or a storage terminal. The lifting mechanism may include a pneumatically or hydraulically acting drive device, like a piston/cylinder device, or an electric drive, like an electric motor. A sensor device may be provided to the lifting mechanism for detecting the current height of top surface 1226 of second carrier unit 1220, and for starting or stopping the lifting mechanism, e.g. when the desired height of top surface 1226 is reached.

Transport system 1000 further has a control unit CU, which includes a first control device CD1 and a second control device CD2. First control device CD1 is arranged on front side 1211 of first carrier unit 1210, and second control device CD2 is positioned at rear side 1212 of first carrier unit 1210. First and second control devices CD1, CD2 are of identical construction, such that an operator may operate transport system 1000 from its front side 1001 as well as from its rear side 1002.

Sensor assembly 1300 of transport system 1000 comprises at least a first sensor device 1310 arranged below first carrier unit 1210, for sensing the vicinity in the front region of transport system 1000. First sensor device 1310, which is directed into a main drive direction DD, may be e.g. realized by a LIDAR system.

A second sensor device 1320 is arranged in front the front of transport system 1000, covered by hood 1112 of housing 1110, for monitoring the region in front of transport system 1000. In the area of sensor device 1320, front hood 1112 has a recess, to enhance and improve the operation of second sensor device 1320, in particular for preventing sensor signals from being blocked by front hood 1112.

In the same manner, a third sensor device 1330 is provided in the rear region of transport system 1000, covered by rear hood 1113, for monitoring the area behind transport system 1000. Also in rear hood 1113, a recess is provided, through which third sensor device detects the region behind transport system 1000.

It has to be noted that, that transport system 1000, during a transport operation, may be moved in drive direction DD as well as in the counter direction. in the latter case, third sensor device 1330 acts as a "front sensor device", whereas second sensor device 1320 monitors the region "behind" transport system 1000.

First, second and third sensor devices 1310, 1320, 1330 are coupled to control unit CU, and/or to first and second control devices CD1, CD2, respectively, such that control unit CU may control transport system 1000 on the basis of the signals provided by first, second and third sensor devices 1310, 1320, 1330.

Transport system 1000 further comprises an indication unit IU arranged on an upper surface of drive assembly 1100. Indication unit ID includes, amongst others, an indication light for visually indicating the operation condition of transport system 1000, or for identifying a possible error. Indication unit IU may, alternatively or additionally, include other indication elements, like an acoustic element, which may send a specific sound or massage to an operator, regarding the kind of disruption.

Fig. 3 is a perspective view to bottom side 1006 of transport system 1000. Fig. 4 is a perspective view to transport system 1000, in which front and rear hood 1112, 1113 and side plates 11114, 1115 have been omitted, such that the interior of drive assembly 1100 is visible.

The bottom of drive assembly 1100 is formed by an at least approximately horizontally arranged chassis 1140, which carries the components of drive assembly 1100.

Chassis 1140 has approximately rectangular recesses 1141a, 1141b at its lateral sides. In recesses 1141a, 1141b, first and second drive units 1120, 1130 are arranged. Each drive unit 1120, 1130 has a mounting bracket 1121, 1131 with a horizontal base plate 1121a, 1131a, which are arranged in recesses 1141a, 1141b, and a vertically extending mounting plate 1121b, 1131b (cf. Fig. 4), to which a drive element or motor 1122, 1132 is mounted. Each drive unit 1120, 1130 further includes a wheel unit including a drive wheel 1123, 1133, which are coupled to motors 1122, 1132. Drive wheels 1122, 1132 are arranged on the side of vertical mounting plates 1121a, 1121b, which face to the outside of drive assembly 1100. In side plates 1114, 1115, at least approximately semi-circular recesses 1114a, 1115a are provided, into which drive wheels 1123, 1133 extend.

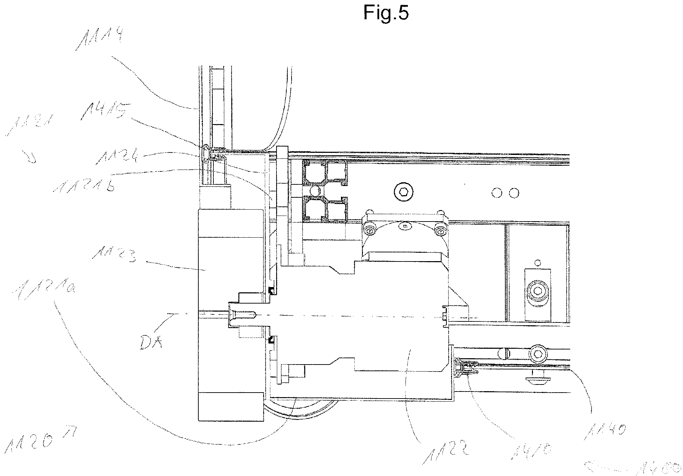

Chassis 1140 is further provided with four domes 1142 arranged in the corner region of chassis 1140, and which extend upwardly, such that cavities are formed in the lower side of chassis 1140. In each cavity in chassis 1140, a support wheel 1150 is arranged. Also in domes 1142, particularly between chassis 1140 and support wheels 1150, a fluid tight sealing (not shown) is provided, for preventing water or humidity from entering drive assembly 1100 there through. Support wheels 1150 are arranged at a height such that their lowermost points are arranged in a common plane together with the lowermost points of drive wheels 1123, 1133 of first and second drive units 1120, 1130. Drive system 1000 is thereby prevented from tilting about drive axis DA (cf. Fig. 5) of first and second drive units 1120, 1130.

First and second drive units 1120, 1130 are of identical design, and will be explained in detail in conjunction with Fig. 5, which shows first drive unit 1120.

As further can be seen in Fig. 4, chassis 1140 has an at least approximately vertically front side portion which extends upwards between the front side corners of chassis 1140, and which is curved rearwards, and an at least approximately horizontal front side portion, which extends from the upper edge of vertical front side portion towards front side 1101 of transport system 1000. Thereby, a space is generated, in which second sensor device 1320 is accommodated.

Chassis 1140 further has an approximately vertically front side portion 1140b which extends upwards between the front side corners of chassis 1140, and which is curved rearwards, and an at least approximately horizontal front side portion 1140b, which extends from the upper edge of vertical front side portion 1140a towards front side 1101 of transport system 1000. Thereby, a space is generated, in which second sensor device 1320 is accommodated.

In accordance therewith, chassis 1140 has an approximately vertically rear side portion 1140c which extends upwardly between the rear side corners of chassis 1140, and which is curved forwards, and an approximately horizontal rear side portion 1140d, which extends from the upper edge of vertical rear side portion 1140c towards rear side 1102 of transport system 1000. Thereby, a space is generated, in which third sensor device 1330 is accommodated.

Transport system 1000 further comprises sealing means 1400 for fluid tight encapsulating at least first and second drive units 1120, 1130 of drive assembly 1100.

Sealing means 1400 include first sealing elements 1410, which are arranged between chassis 1140 and first and second drive units 1120, 1130.

As it can be seen in Fig. 5, which is a partial cross-sectional view to first drive unit 1120 of drive assembly 1100, first drive unit 1120, which is equal to second drive unit 1130, comprises mounting bracket 1121 with at least approximately horizontal base plate 1121a and at least approximately vertically extending mounting plate 1121b. On the shaft of motor 1122, drive wheel 1123 is mounted. Between mounting plate 1121b and drive wheel 1123, a wheel fender 1124 is arranged, which covers drive wheel 1123 against drive arrangement 1100.

A second sealing element 1412 in the form of a sealing ring, that is part of sealing means 1400, is arranged at the shaft of motor 1222, between mounting plate 1121b and wheel fender 1124. Second sealing element 1412 prevents a fluid or humidity from entering first drive unit 1120 between motor 1122 and mounting plate 1121b.

Sealing means 1400 further include third sealing elements 1414 provided along the edges of chassis 1140, which seal a possible gap between chassis 1140 and front hood 1112, rear hood 1113 and side plates 1114, 1115 of housing 1110.

A fourth sealing element 1415 is arranged at the outer edge of wheel fender 1124 and between wheel fender 1124 and side plate 1114 of housing 1110.

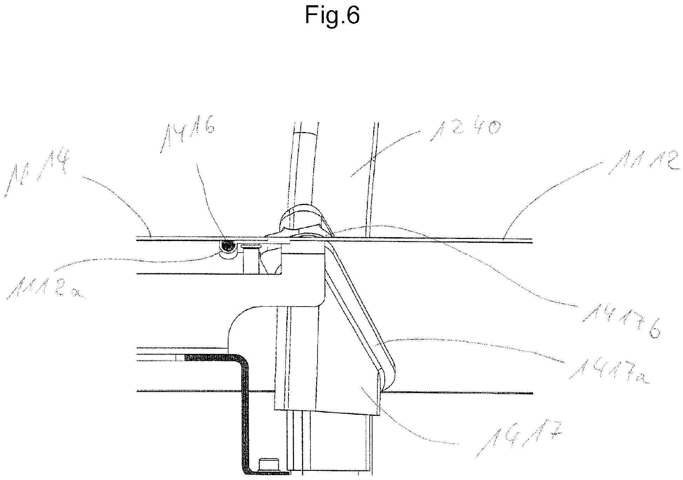

Fig. 6 is a partial cross-sectional view to housing 1110 of drive assembly 1100, and shown a region in which side plate 114 overlaps front hood 1112. the edge of front hood 1112 is provided with a bead 1112a, that extends along the edge of front hood 1112 in the region where it is covered by side plates 1114, 1115. Sealing means 1400 include fifth sealing element 1416, which is arranged in bead 1112a of front hood 1112. Fifth sealing element 1416 has an at least approximately circular cross section, the diameter of which preferably corresponds to the diameter of bead 1112a, such that a fluid tight sealing is provided between front hood 1112 and side plates 1114, 1115 of housing 1110. In accordance with this, also rear hood 1113 is provided with a bead along its edges, that are covered by side plates 1114, 1115, and in which a further fifth sealing element is arranged, for providing a fluid tight sealing between rear hood 1113 and side plates 1114, 1115 of housing 1110.

Furthermore, sealing means 1400 include sixth sealing elements 1417 in the form of cuffs, which are arranged on support posts 1240 in the region, where support posts extend through housing 1110. As it particularly can be seen in Fig. 6, each sixth sealing element 1417 includes two surrounding lips 1417a, 1417b with a gap there between. Front hood 1112 and side plate 1114 of housing 1110, and rear hood 1113 and side plate 1115, respectively, extend into said gap, thereby, a fluid tight sealing is provided between front and rear hoods 1112, 1113 and side plates 1114, 1115 of housing 1110.

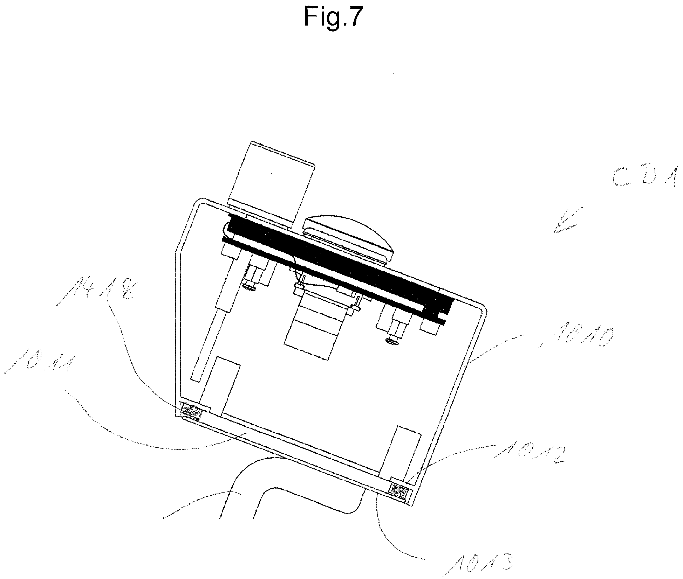

Fig. 7 is a cross-sectional view to first control device CD1 of transport system 1000, which is of identical design like second sensor device CD2.

First sensor device CD1 has an at least approximately cuboid housing 1010, in which control elements are accommodated. As can be seen in Fig. 7, housing 1010 has an opening 1011 in its bottom region, and a flange 1012 arranged inside housing 1010 and surrounding opening 1011. A bottom cover plate 1013 is provided for closing opening 1011, and which is provided with a mounting element 1020, by means of which first control device CD1 is mounted to first carrier unit 1012.

Between bottom cover plate 1013 and flange 1012, a seventh sealing element 1418 of sealing means 1400 is arranged, for fluid tight sealing housing 1010 of first sensor device CD1. Seventh sealing element 1418, according to Fig. 7, is a flat sealing ring, which surrounds opening 1011 in housing 1010. It has to be understood that seventh sealing element 1418 may have any suitable cross section, like a circular or oval cross-section. It has further to be understood that the control elements of first control device CD1, which extend through housing 1010, are also provided with respective sealing elements.

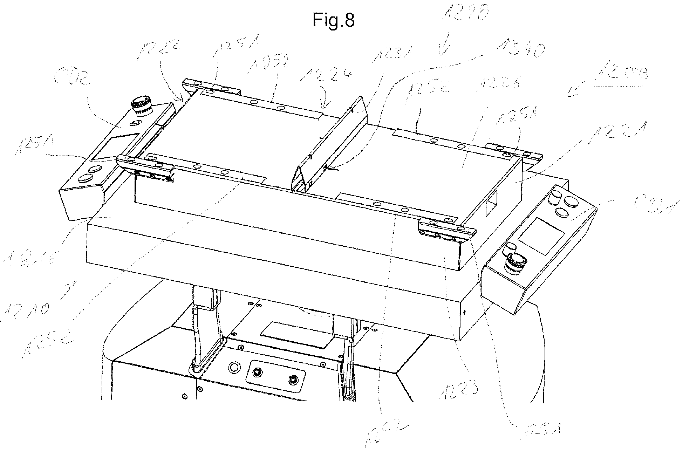

Fig. 8 is a perspective view to carrier assembly 1200 of transport system 1000.

Second carrier unit 1220, is arranged on top side 1216 of first carrier unit 1210. On top side 1226 of second carrier unit 1220, separation device 1230 with separation element 1231 in the shape of a bar formed by a hollow profile is arranged. Separation element 1231 separates top surface 1226 into two at least equal sub-surfaces, on which two item, like boxes, preferably standardized boxes, may be placed.

Separation device 1230 further includes a fourth sensor device 1340, which is arranged inside the hollow profile or separation element 1231. Sensor device 1340 includes at least one sensor element, capable of detecting the presence or absence of an item or object on top surface 1226, one or both sides of separation element 1231.

Second carrier unit 1220 is further provided with an item support device 1250, which includes approximately bar-shaped support and securing elements 1251, which are arranged at right and left sides 1223, 1224 and along their upper edges, such that support and securing elements 1251 exceed front and rear sides 1221, 1222 of second carrier unit 1220.

In the region of its longitudinal edges, top side 1226 of second carrier unit 1220 is provided with flat reinforcement stripes 1252. As can be seen in Fig. 8, support and securing elements 1251 exceed top side 1226 about a height such that the upper surfaces of support and securing elements 1251 and reinforcement stripes 1252 are arranged in a common plane.

The size and the position of support and securing elements 1251 is selected such that support and securing elements 1251 may engage the bottom region of an item, like a standardized box, and in particular recesses or cavities, which e.g. may be formed by reinforcing rips.

In operation, autonomous transport system 1000 is used to transport items, like standardized boxes containing goods, between two or more destinations. At a first destination, like a storage or a working station of a plant, items may be loaded tonto second carrier unit 1220, and one or more further destinations, to which said items are transported and removed from transport system 1000. Loading and unloading items to and from transport system 100 may be executed manually by an operator, or automatically by a robot or the like.

For securely moving between the selected destinations, like a first destination and a second destination, a predefined moving path may be programed to control unit CU of autonomous transport system 1000. Moreover, times for pausing transport system at first and second destinations, like loading and unloading times, may be programmed. However, in specific cases, it may be sufficient to program only first and second destination, and transport system 1000 will automatically select a movement path there between.

For transporting items or goods between the first and the second destination, transport system 1000 is placed at one destination, like a loading station, where the items to be transported, like standardized boxes, are loaded onto second carrier unit 1220. A box is placed on second carrier unit 1220, whereby that support and securing elements 1251 engage the bottom region of said box, like recesses or cavities, e.g. formed by reinforcing rips. The box is thereby secured against slipping on second carrier unit 1220. Fourth sensor device 1340 detects the presence of one or two boxes on second carrier unit 1220, and transmits a respective signal to control unit CU. Fourth sensor device 1340 or an additional sensor device, which e.g. may detect the weight of the boxes loaded to transport system 1000, may detect, whether a predefined number of boxes or a predefined overall weight is reached.

If a predefined number of boxes is loaded, transport system 1000 may then automatically move towards second destination. Alternatively or additionally, an operator may actuate transport system 1000, e.g. by pushing a bottom on control unit CU, to cause transport system 1000 to move towards the second destination. It has to be understood that an operator may manually overwrite any automatic order on the basis of sensor signals, such that transport system 1000 e.g. may be started even if the predefined number of boxes or the overall weight is not reached.

When arriving at the second destination, transport system 1000 moves into a predefined position, for being unloaded. Fourth sensor device 1340 or an additional sensor, like a weight sensor, monitors the unloading process, and detects whether all boxes are unloaded from second carrier unit 1220. Fourth sensor device 1340 outputs a corresponding signal to control unit 1000, which then allows transport system to move back to the first destination. Alternatively or additionally, an operator may indicate that the unloading process has been finished, and causes transport system to move back to the first destination.

It is further possible that transport system 1000 prior reaching the second destination for being unloaded, occupies a waiting position close to the second destination, until another transport system, which is still in the unloading position, is removed from the loading position. In the same manner, a waiting position may be defined close to the first destination, in which transport system 1000 waits until another transport system has left the first destination after being loaded.

For moving from the first destination towards the second destination and back to the first destination, a predefined way may be programed to control unit CU of transport system 1000. This predefined way usually is free from any obstacles. However, first and second sensor devices 1310, 1320 monitor the moving path as well as the surrounding area. In the case that an obstacle in the moving path is detected, transport system 1000 may stop automatically, and send a respective massage or signal together with the current position to an operator, which then checks the situation and removes the obstacle from the moving path. Alternatively, first and second sensor devices 1310, 1320 may estimate the position and size of the obstacle, and control unit CU may compute an alternative route around the obstacle, such that transport system, when having passed the obstacle, is again on the programed moving path.

It is also possible that only the first and the second destinations are programmed in control unit CU, and that transport system 1000 selects an optimized moving path on the basis of the signals of sensor assembly 1300. An optimized moving path may e.g. be selected based on the shortest way to move, the shortest time to reach the first or second destination, or the most secure moving path, in which a minimum of obstacles is expected. In this mode of movement, first, second and third sensor devices 1310, 1320, 1330 monitor the possible movement path and the surrounding area. In the case that possible obstacles or persons in the surrounding area are detected, control unit CU estimates the position and size of the obstacles or a possible moving path of the persons, and establishes an alternative route. Said alternative route may have to fulfil various conditions, like the distance for passing obstacles or persons, which may be different, like a large distance to a person than an obstacle, or the drive speed in different situations, like a higher speed for passing obstacles and a lower speed for passing persons.

In general, it is possible that the moving path of transport system 1000 as well as the moving conditions, like speed or distances to obstacles or persons, may be different, dependent on the filling level of transport system 1000. The maximum speed of transport system 1000 when being empty may be lower, than when being filled with the maximum number. Furthermore, for reducing the risk of injuries, the distance for passing persons, which may move unpredictably, may be larger than the distance to obstacles, like immobile objects.

As explained in conjunction with the present embodiment of transport system 1000, sealing means 1400 are provided, for at least fluid tight encapsulating first and drive units 1120, 1130. Moreover, sealing means 1400 also provide a fluid tight sealing to drive assembly 1100 as a whole, and to control unit CU, whereby all components of transport unit 1000, in particular, all electric, electronic and mechanic components are protected against moisture. Accordingly, transport assembly 1000 may particularly be used under wet environmental conditions, like on wet ground, when splashing water or the like may occur.

In addition, sealing means 1400 may be designed such that transport system 1000 is not only protected against splashing water but also against pressurized fluids, like pressurized water, for example by selecting a specific sealing material or specific shapes or cross sections of the sealing elements. Accordingly, transport system 1000 is further protected against moisture, and may e.g. be cleaned with pressurized water, and whereby the area of application of transport system 1000 extended.

It has to be noted that support and securing elements 1251 may be exchanged by support and securing elements having another shape, for adjusting second carrier unit 1220 to boxes or containers of another type, or which have another size or shape, like specific, non-standardized boxes.

It has further to be noted that second carrier unit 1220 may have any suitable shape in adaption to specific goods or boxes to be transported, or that second carrier unit 1220 may be exchanged by another second carrier unit having a specific shape or having specific functions.

Naturally, more than one separation device 1230 may be provided on top surface 1226 of second carrier unit 1220, for dividing top surface 1226 into more than two, preferably equal, portions. In this case, each dividing element 1231 is provided with a fourth sensor device 1340, for detecting goods or a box on the respective portion of top surface 1226.

## Claims

1. An autonomous transport system (1000) having at least a front side (1001), a rear side (1002), two lateral sides (1003, 1004), a top side (1005) and a bottom side (1006, and comprising a drive assembly (1100) for moving the transport system (1000) on a ground, a carrier assembly (1200), a control unit (CU) and a sensor assembly (1300),
wherein the drive assembly (1100) includes at least one drive unit (1120) for driving at least one wheel unit (1123) comprising at least one drive wheel, a chassis (1140) on which the at least one drive unit (1120) and the wheel unit (1123) are mounted, and a housing (1110) for covering at least the one drive unit (1120),
wherein the housing (1110) comprises at least side plates (1114, 1115), a front plate (11112) and a rear plate (1113), wherein the side plates (1114, 1115) and the chassis (1140) are provided with recesses (1114a, 1141a) for the wheel unit (1123,
wherein the recesses (1114a, 1141a) for the wheel unit (1123) include sealing means (1400) for fluid tight encapsulating at least the one drive unit (1120).

2. The autonomous transport system (1000) according to claim 1,
wherein the drive assembly (1100) includes at least one second drive unit (1130) comprising at least one drive wheel, wherein the first and second drive units (1120, 1130) each are arranged in a recess (1114a, 1115a; 1141a, 1141b) of the side plates (1114, 1115) and the chassis (1140), and wherein the sealing means (1400) include sealing elements (1410) arranged at least between the first and second drive units (1120, 1130) and the chassis (1140).

3. The autonomous transport system (1000) according to claim 1 or 2,
wherein the chassis (1140) has an at least approximately even bottom panel and at least one dome (1142) formed by the bottom panel, wherein the dome (1142) extends upwardly from the upper surface of the bottom panel,
wherein at least one support wheel (1150) is accommodated and at least fluid tight mounted in the cavity formed by the at least one dome (1142), and which partially extends below the lower surface of the bottom panel of the chassis (1140).

4. The autonomous transport system (1000) according to any of claims 1-3,
wherein the sealing means (1400) include sealing elements (1414, 1415) arranged between the housing (1110) and the chassis (1140).

5. The autonomous transport system (1000) according to any of claims 1-4
wherein the chassis (1140) has an approximately vertically front side portion (1140a) and an approximately vertically rear side portion (1140c), which extend from the upper side of the bottom portion, a horizontal front side portion (1140b) and a horizontal rear side portion (1140d), which extend from the upper edges of the vertical front side portion (1140a) and the vertical rear side portion (1140c) towards the front end and the rear end of the bottom portion of chassis (1140), respectively, and
wherein the sealing means 1400 include sealing elements (1414) arranged along the outer edges of the vertical front and rear side portions (1140a, 1140c) and the horizontal front and rear side portions (1140b, 1140d) of the chassis (1140).

6. The autonomous transport system (1000) according to any of claims 1-5
wherein the sealing means (1400) include sealing elements (1416) arranged between the side plates (1114, 1115) and front plates (1112, 1113) of the housing (1110) and the chassis (1140).

7. The autonomous transport system (1000) according to any of claims 1-6,
wherein the carrier assembly (1200) has an at least approximately cuboid first carrier unit (1210) arranged horizontally above the drive assembly (1100) and preferably supported by approximately vertically aligned support posts (1240), which are mounted to the drive assembly (1100), and wherein further preferably the first carrier unit (1210) has a front side (1211) and a rear side (1212) which correspond to the front side (1001) and the rear side (1002) of the transport system (1000).

8. The autonomous transport system (1000) according to claim 7,
wherein the control unit (CU) includes a first control device (CD1) mounted at the front side (1211) of the first carrier unit (1210), and preferably a second control device (CD2) mounted to the rear side (1212) of the first carrier unit (1210).

9. The autonomous transport system (1000) according to claim 8,
wherein the first and second control devices (CD1, CD2) each have a housing (1010) for at least fluid tight accommodating the components of the control devices (CD1, CD2).

10. The autonomous transport system (1000) according to any of claims 7-9,
wherein the carrier assembly (1200) has an approximately cuboid second carrier unit (1220) arranged on the upper surface (1216) of the cuboid first carrier unit (1210).

11. The autonomous transport system (1000) according to any of claims 7-10,
wherein the first carrier unit (1210) includes a lifting arrangement for reversibly lifting at least the second carrier unit (1220).

12. The autonomous transport system (1000) according to claim 10 or 11,
wherein the second carrier unit (1220) has a separation device (1230) arranged on its upper surface (1226), for separating the upper surface (1226) into two at least approximately equal sub-surfaces.

13. The autonomous transport system (1000) according to any of claims 1-12,
wherein the sensor assembly (1300) includes at least a first sensor device (1310) arranged in the region of the front end (1001) of the transport system (1000), for at least detecting obstacles in the movement path of the transport system (1000).

14. The autonomous transport system (1000) according to claim 13,
wherein the sensor assembly (1300) includes a sensor device (1340) with at least one sensor element arranged in the separation device (1230), for detecting the presence or absence of an object positioned on the upper surface (1226) of the second carrier unit (1220).

15. The autonomous transport system (1000) according to any of claims 1-14,
wherein the control unit (CU) is adapted to control the movement of the transport system (1000) on the basis of a programmed movement profile and/or on the basis of programmed starting and destination points, with an autonomous movement there between, controlled by sensor data provided by the sensor assembly (1300).
